# EUROPÄISCHE PATENTSCHRIFT

(11) **EP 0 813 666 B1**
(45) Veröffentlichungstag und Bekanntmachung des Hinweises auf die Patenterteilung: **05.12.2001**
(21) Anmeldenummer: 96907386.5
(22) Anmeldetag: 08.03.1996
(51) Int. Cl.: F16L 55/16, E03F 3/06

(54) **HUTFÖRMIGE ANSCHLUSSMANSCHETTE FÜR HAUSANSCHLÜSSE IN KANALROHREN**
HAT-SHAPED CONNECTION SLEEVE FOR HOUSE SERVICE CONNECTIONS IN SEWER PIPES
MANCHETTE DE RACCORDEMENT EN FORME DE CHAPEAU POUR BRANCHEMENTS DOMESTIQUES DANS DES CANALISATIONS D'EGOUT

(30) Priorität: 09.03.1995 DE 19508188
(43) Veröffentlichungstag der Anmeldung: 29.12.1997
(73) Patentinhaber: Trolining GmbH, 53840 Troisdorf (DE)
(72) Erfinder: MICHEL, Peter, Columbia, SC 29209 (US); VOIGT, Thomas, D-50937 Köln (DE)
(74) Vertreter: Wübken, Ludger
(86) Internationale Anmeldenummer: EP9600987
(87) Internationale Veröffentlichungsnummer: WO9628685

(56) Entgegenhaltungen:
- EP-A- 0 674 131
- WO-A-91/07619
- DE-A- 3 929 558
- DE-A- 4 031 949
- GB-A- 2 243 658

## Beschreibung

### Technisches Gebiet

Die Erfindung betrifft ein Verfahren und eine hutförmige Anschlußmanschette zum fluiddichten Anbinden von Hausanschlüssen an ein mit einem thermoplastischen Inliner saniertes Kanalrohr sowie ein Verfahren zur Herstellung hutförmiger Anschlußmanschetten.

### Stand der Technik

Ein Verfahren zum Sanieren von beschädigten Kanalrohren o. dgl. ist aus der WO 93/21398 bekannt. Nach diesem Verfahren wird ein äußerer und ein innerer schlauchförmiger Inliner in den beschädigten Kanal eingezogen. Der innere Inliner weist auf seiner Außenseite Noppen als Abstandshalter zum äußeren Inliner auf. Der Zwischenraum zwischen den Inlinern wird mit einem aushärtbaren Mörtel verfüllt. Die Sanierung von Kanalrohren mit diesem Verfahren ist wesentliche preiswerter als die Verlegung neuer Kanalrohre. Ein Problem stellen jedoch Hausanschlüsse dar, die in der Regel seitlich in den zu sanierenden Kanal einmünden. Zwar ist es bekannt, mittels geeigneter Roboter die Hausanschlüsse nach erfolgter Sanierung durch Fräsen wieder freizulegen, jedoch ist der Übergang zwischen dem Hausanschluß und dem sanierten Kanalrohr in der Regel mangelhaft abgedichtet und stellt somit eine Quelle für eine Hinterläufigkeit des Inliners dar. Insbesondere bei Verwendung von thermoplastischen Inlinern aus Materialien wie Polyethylen, die nicht geklebt werden können, ist die nachträgliche Abdichtung zwischen Hausanschluß und dem sanierten Kanalrohr ein bislang ungelöstes Problem.

Aus der DE-A-40 31 949 ist ein Verfahren zur Abdichtung eines Seiteneinlaufs in einen sanierten Hauptkanal mittels einer mehrteiligen Vorrichtung bekannt, die ein starren Rohr umfaßt, welches an seinem dem Hauptkanal zugewandten Ende mittels einer Dichtung dichtend anliegt. Die Dichtfunktion wird durch den zusätzlichen Stützring erzielt. Diese rein mechanisch wirkende mehrteilige Lösung hat in der Praxis gravierende Nachteile: zum einen ist das Einbringen der einzelnen Teile in nicht zugänglichen Rohren selbst mit Hilfe von Robotern äußerst problematisch. Zum anderen können solche Lösungen nur bei absolut runden Querschnitten der Seiteneinläufe verwendet werden. Auch scheitert ihr Einsatz bei Beschädigungen im Einlaufbereich, da hier die Dichtung ihre Dichtfunktion nicht ausüben kann. Schließlich ist das Rohr nicht gegen den Seiteneinlauf abgedichtet, so daß hier eine Hinterläufigkeit auftritt.

Aus der DE-A1 39 29 558 ist ein strumpfförmiges Auskleidungsformteil bekannt, das in der Praxis vielfältig bei verklebbaren Kanalrohren eingesetzt wird und in der Regel aus Glasfaservlies besteht. Diese Auskleidungsformteile sind allerdings bei mit thermoplastischen Inlinern ausgekleideten Hauptrohren nicht anwendbar, da diese thermoplastischen Inliner nicht mit dem Harz des Auskleidungsformteils verklebt werden können.

Aus der GB-A 2 243 658, die den nöchst Kommenden Stand der Technik bildet, ist ein Verfahren zur Abdichtung von Seiteneinläufen in ein saniertes Hauptrohr bekannt, wobei zunächst ein Anschlußelement mit dem thermoplastischen Kunststoff des Hauptrohres verschweißt wird. Anschließend wird in das Anschlußrohr ein harzgetränkter Subliner eingebracht, der mit dem thermoplastischen Anschlußelement verbunden werden muß. Diese Verbindung erfolgt durch Zwischenschalten mehrerer Zusatzelemente, was einen hohen Aufwand erfordert und bei von außen nicht zugänglichen Hausanschlüssen kaum durchführbar ist.

### Aufgabe

Aufgabe der vorliegenden Erfindung ist es daher, ein Verfahren und Mittel zum fluiddichten Anbinden von Hausanschlüssen an ein mit einem thermoplastischen Inliner saniertes Kanalrohr zur Verfügung zu stellen, das mit begrenztem Aufwand auch bei nicht von außen zugänglichen Hausanschlüssen durchgeführt werden kann. Das Anbinden der Hausanschlüsse soll dabei insbesondere problemlos mittels herkömmlicher Roboter auch in nicht begehbaren sanierten Kanalrohren o. dlg. möglich sein.

### Darstellung der Erfindung

Die Erfindung löst diese Aufgabe durch eine ein Verfahren nach Anspruch 1 unter Einsatz einer hutförmige Anschlußmanschette nach Anspruch 3 mit einer Krempe aus thermoplastischem Kunststoff mit einer Ausnehmung, die in Form und Abmessung etwa dem sichtbaren Querschnitt des Hausanschlusses entspricht, wobei die Anschlußmanschette ein als Schlauch geformtes, aus Fasern oder Fäden bestehenden Flächengebilde wie Vlies, Gewebe, Gewirke o. dgl. aus thermoplastischem Kunststoff aufweist, und wobei das schlauchförmig geformte Flächengebilde mit einem seiner Enden die Krempe im Bereich der Ausnehmung überlappt und mit dieser verschweißt ist. Nach einer alternativen Ausführungsform gemäß Anspruch 2 bzw. 4 der Erfindung weist die Krempe im Bereich der Ausnehmung einen angeformten oder angeschweißten Anschlußstutzen auf, wobei das zu einem Schlauch geformten Flächengebilde wie Vlies, Gewebe, Gewirke o. dgl. aus thermoplastischem Kunststoff mit einem seiner Enden den angeformten oder angeschweißten Anschlußstutzen wenigstens teilweise überlappt und mit diesem verschweißt ist.

Die Krempe besteht bevorzugt aus dem gleichen Material wie der thermoplastische Inliner des sanierten Kanalrohres, insbesondere aus Polyethylen. Die Krempe wird beispielsweise durch Tiefziehen aus einer beidseitig glatten Bahn aus entsprechendem Material hergestellt, wobei die Dicke des Materials vor dem Tiefziehen bevorzugt zwischen 1 und 5 mm, insbesondere zwischen 1,5 und 3 mm beträgt. Die Krempe weist zweckmäßigerweise eine etwa runde oder ggf. leicht ovale Form auf, wobei der Durchmesser etwa dem 1,2 bis 2-fachen des sichtbaren Innendurchmessers des anzuschließenden Hausanschlusses beträgt.

Insbesondere etwa in der Mitte der Krempe befindet sich eine Ausnehmung, die in Form und Abmessung dem sichtbaren Querschnitt des Hausanschlusses entspricht, also bei senkrecht in das Kanalrohr mündenden Hausanschlüssen einen kreisförmigen, bei schräg in das Kanalrohr mündenden Hausanschlüssen einen elliptischen Querschnitt aufweist. Die Krempe weist in der Aufsicht somit bei senkrecht in das Kanalrohr mündenden Hausanschlüssen eine Kreisring-Form auf.

Nach einer bevorzugten Ausführungsform der Erfindung wird beim Tiefziehen der Krempe die Form der Krempe der Innenkontur des Kanalrohres an der Stelle der Hausabzweigung angepaßt, so daß die Krempe in einer Ebene den Krümmungsradius des Kanalrohres aufweist. Gleichzeitig wird nach der bevorzugten Ausführungsform der Erfindung im Bereich der Ausnehmung ein Anschlußstutzen angeformt, der einige Millimeter bis einige Zentimeter in Richtung des Hausanschlusses weist und dessen innerer Kontur, d. h. Durchmesser und Richtung, entspricht. Ggf. kann der Anschlußstutzen auch aus einem angeschweißten Rohr bestehen, wobei die Länge des Anschlußstutzens auch einige Zentimeter übersteigen kann.

Das die Krempe bzw. den Anschlußstutzen überlappende, zu einem Schlauch geformte Flächengebilde wie z. B. Vlies aus thermoplastischem Kunststoff weist bevorzugt eine Flächengewicht zwischen 200 und 800 g/m², insbesondere etwa 300 bis 500 g/m² auf. Es besteht bevorzugt aus gleichem oder ähnlichem Material wie die Krempe, bevorzugt aus Polyethylen. Die Fadendicke sollte < 0,2 mm betragen, bevorzugt werden Vliese aus Fäden mit einer Dicke < 0,1 mm. Alternativ zum Vliesmaterial können auch Gewebe, Gewirke, Gelege, Filze oder ähnliche aus Fäden oder Fasern aufgebaute Flächengebilde verwendet werden, die wenigstens weitgehend aus thermoplastischem, also verschweißbarem Kunststoff bestehen.

Das Flächengebilde weist bevorzugt ein Mindestmaß an Dehnbarkeit auf. Es liegt im Bereich der vorliegenden Erfindung, wenn das aus Fasern oder Fäden bestehende Flächengebilde neben Fäden aus thermoplastischem Kunststoff auch Fasern oder Fäden aus anorganischem Material wie Kohlefasern oder Glasfasern aufweist, soweit die Verschweißbarkeit insgesamt dadurch nicht behindert wird. Bevorzugt werden jedoch Vliese, Gewebe, Gewirke o. dgl., die ausschließlich aus thermoplastischen Kunststoffasern oder -fäden bestehen.

Zum Verschweißen des Vlieses o. dgl. mit der Krempe bzw. dem Anschlußstutzen wird nach einer Ausführungsform der Erfindung das Vliesmaterial o. dgl. bis auf einen Überstand von ca. 1 bis 5 mm mit einem Metallblech, -ring o. dgl. abgedeckt und anschließend im Warmgasziehschweiß-Verfahren mit der Krempe bzw. dem Anschlußstutzen verschweißt. Durch das Abdecken des Vliesmaterials o. dgl. wird verhindert, daß dieses sich durch die Wärmezufuhr beim Schweißen zusammenkräuselt und von der beabsichtigten Schweißstelle zurückzieht.

Nach einer bevorzugten Ausführungsform der Erfindung erfolgt die Verschweißung des schlauchförmig geformten Flächengebildes mit einem seiner Enden mit der Krempe bzw. dem angeformten oder angeschweißten Anschlußstutzen mittels Laserlicht. Hierzu wird das zu einem Schlauch geformte Flächengebilde von einer Seite, zweckmäßig mit seiner Außenseite, an die Krempe bzw. an den Anschlußstutzen angepreßt und von der anderen Seite der Krempe bzw. des Anschlußstutzens durch die Krempe bzw. durch den Anschlußstutzen hindurch mittels Laserlicht mit der Krempe bzw. mit dem Anschlußstutzen verschweißt. Hierzu muß einerseits das Material der Krempe bzw. das des Anschlußstutzens für das Laserlicht durchlässig sein, während andererseits das Material der Fasern oder Fäden das Laserlicht absorbiert.

Als Laser können beispielsweise ND:YAG-Laser mit einer Wellenlänge von z.B. 1064 nm und einer Leistung von 80W eingesetzt werden, wobei diese Werte nicht kritisch sind.

Soweit in den Ansprüchen und der Beschreibung der Begriff "Laser" verwendet wird, sollen darunter allgemein auch andere energiereiche gebündelte Lichtquellen verstanden werden, auf die Kohärenz der Strahlung kommt es dabei nicht an.

Zum Anbinden von Hausanschlüssen an das Kanalrohr wird die Krempe mit dem thermoplastischen Inliner verschweißt. Hierzu weist die Krempe nach einer bevorzugten Ausführungsform der Erfindung auf seiner dem Inliner zugesandten Seite eine ring- oder spiralförmig angeordnete Heizwendel auf.

Im einfachsten Fall kann die Heizwendel aus einem einfachen Kupferdraht bestehen, der oberflächlich durch Schweißen mit der Krempe verbunden ist. Bevorzugt wird jedoch eine Heizwendel eingesetzt, die aus einem Draht- oder bevorzugt schlauchförmigen Kunststoffprofil besteht mit einem Außendurchmesser von 5 bis 15 mm, in das in der Nähe der Oberfläche der eigentliche Heizleiter, z. B. eine Kupferlitze, in Spiralform eingebettet ist. Beim Schweißvorgang wird die Heizwendel elektrisch beheizt, wobei zunächst das Material des schlauch- bzw. drahtförmigen Kunststoffprofils und danach die Oberflächenbereiche des Inliners und der Krempe in ein hochviskosen Schmelzezustand überführt werden. Dabei dient das Kunststoffmaterial des schlauch- bzw. drahtförmigen Kunststoffprofils als Schweißzusatz.

Soweit nach einer besonders bevorzugten Erfindung die Heizwendel als schlauchförmiges Profil ausgeführt wird, d. h., einen kreisringförmigen Querschnitt aufweist, nimmt deren Steifigkeit beim Schweißvorgang erheblich ab, so daß der zunächst annähernd kreisrunde oder leicht ovale Querschnitt stark abgeflacht wird. Hierdurch wird erreicht, daß der Schweißdruck über die gesamte Länge der Heizwendel gleichmäßig verteilt und die Kontrolle der Schweißnaht erleichtert wird.

Wenn für die Heizwendel und die Krempe der Anschlußmanschette jeweils transparentes Material verwendet wird, ist nach erfolgter Schweißung der eigentliche Heizleiter, d. h. z. B. die spiralförmig angeordnete Kupferlitze, durch das Material der Krempe sichtbar. Soweit das Material der Krempe leicht opak ist, kann die Qualität der Verschweißung optisch sehr exakt kontrolliert werden.

Nach dem Verschweißen der Krempe mit dem thermoplastischem Inliner wird das aus Fasern oder Fäden bestehende Flächengebilde beispielsweise mit einem duroplastisch aushärtenden Harz wie einem Epoxidharz getränkt und beispielsweise im Umstülpverfahren in das kanalrohrseitige Ende des Hausanschlusses eingebracht und an dessen Wandung angepreßt. Soweit mit einem Roboter gearbeitet wird, wird das Flächengebilde, z. B. Vlies, zweckmäßigerweise bereits vor dem Einfahren in den Kanal mit einem duroplastischen Harz satt getränkt. Nach dem Anschweißen der Krempe an den Inliner erfolgt das Umstülpen beispielsweise durch einen aufblasbaren Balg, der gleichzeitig das Anpressen des getränkten Vlieses an die Wandung des Hausanschlusses bewirkt.

Durch das Verschweißen des aus Fasern oder Fäden bestehenden Flächengebildes mit der Krempe bzw. dem Stutzen der Anschlußmanschette einerseits und der Verklebung mit dem Hausanschluß andererseits wird eine Anbindung mit fluiddichter Abdichtung des Hausanschlusses an das mit einem thermoplastischem Inliner sanierte Kanalrohr erreicht. Die erfindungsgemäße Anschlußmanschette kann dabei problemlos mit an sich bekannten Robotern in das Kanalrohr eingebracht, dort mit dem Inliner verschweißt und dem Hausanschluß verklebt werden.

Die Erfindung wird nachfolgend anhand eines Ausführungsbeispiels sowie der Zeichnung näher erläutert.

### Kurze Beschreibung der Zeichnung

Es zeigen dabei
- Fig. 1: einen Querschnitt durch eine hutförmige Anschlußmanschette gemäß Schnitt A-A in Fig. 2 (nicht maßstäblich) ;
- Fig. 2: eine Aufsicht auf die Anschlußmanschette von der dem Inliner zugewandten Seite;

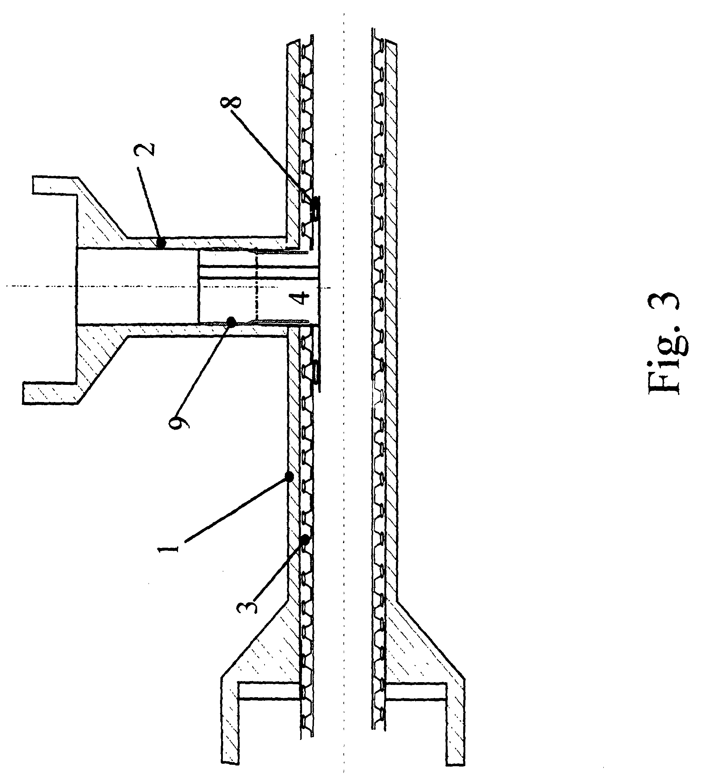

- Fig. 3: einen erfindungsgemäß fluiddicht abgedichteten Hausanschluß.

### Bester Weg zur Ausführung der Erfindung

In ein Kanalrohr 1 mit einer Nennweite DN 400 mm mündet ein Hausanschluß 2 mit einer Nennweite DN 150 mm. Das Kanalrohr 1 ist entsprechend dem in der WO 93/21398 bekannten TroLining®-Verfahren mit einem thermoplastischen Inliner 3 aus HDPE saniert worden. Mittels eines handelsüblichen Roboters wird die Hausanschlußstelle 4 aufgefräst und der Inliner 3 im Bereich des Hausanschlusses sorgfältig gereinigt.

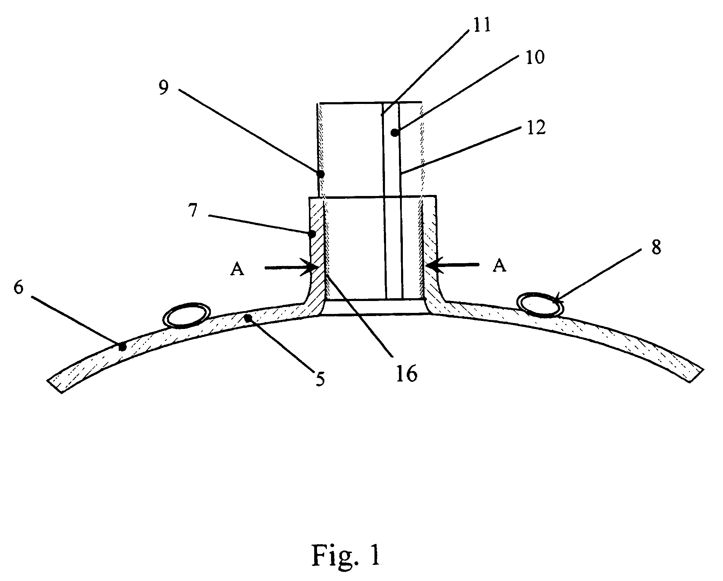

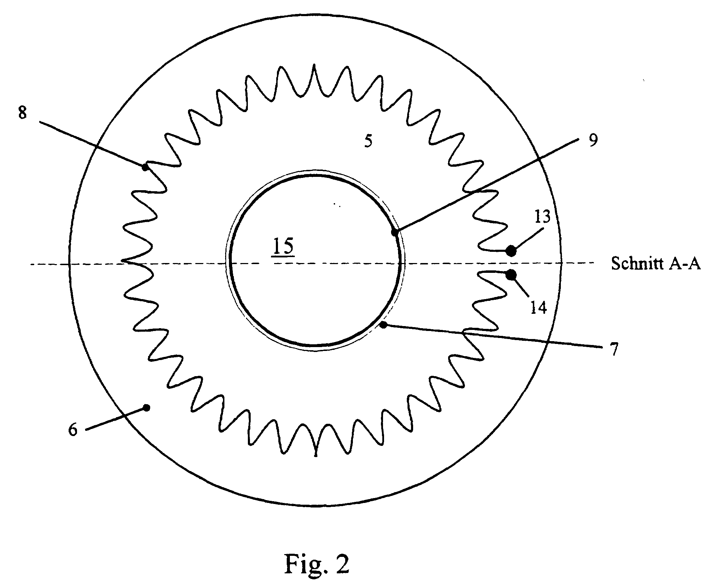

Die in Fig. 1 im Schnitt und in Fig. 2 in der Aufsicht dargestellte Anschlußmanschette 5 wird aus einer 2 mm starken Bahn im Tiefziehverfahren hergestellt. Hierzu wird ein kreisförmiger Abschnitt der Bahn mit einem Außendurchmesser von 250 mm auf eine Temperatur von 120 °C erwärmt und in einem Tiefziehwerkzeug verformt. Die Krempe 6 nimmt dabei in einer Ebene eine leicht gewölbte Form an, die dem Innendurchmesser des Kanalrohres 1 entspricht (s. Fig. 1). Gleichzeitig wird der Anschlußstutzen 7 mit einer Länge von 15 mm angeformt. Der Anschlußstutzen 7 weist einen äußeren Durchmesser von 148 mm auf, so daß er in den Hausanschluß 2 paßt. Als Material für die Herstellung der Krempe 6 mit angeformtem Anschlußstutzen 7 wird leicht opakes HDPE verwendet.

In Fig. 2 ist dargestellt, daß die Heizwendel 8 ringförmig auf der Krempe 6 angeordnet ist. Die Heizwendel 8 besteht aus einem schlauchförmigen Profil mit leicht ovalem Querschnitt (Fig. 1). Die Heizwendel 8 besteht ebenfalls aus HDPE, in das nahe der Oberfläche spiralförmig eine Kupferlitze eingebettet ist. Die einzelnen Windungen haben einen Abstand von ca. 2 mm zueinander, die Heizwendel 8 selbst besitzt einen mittleren äußeren Durchmesser von 8 mm. Zum Verschweißen der Heizwendel 8 mit der Krempe 6 wird die Heizwendel 8 zunächst, wie in Fig. 2 dargestellt, ringförmig auf die Krempe 6 gelegt und unter leichtem Anpreßdruck kurzzeitig durch Anlegen einer Spannung an die freien Enden der Kupferlitze erwärmt, bis eine leichte Verschweißung zwischen Heizwendel 8 und Krempe 6 erfolgt ist. Anschließend werden die Anschlußdrähte der Heizwendel 8 durch die Krempe 6 geführt und an die Anschlußkontakte 13, 14 gelötet (Fig. 2).

Das zu einem Schlauch geformte Vlies 9 besteht aus feinen HDPE-Fasern. Es weist ein Flächengewicht von 400 g/m² auf. Durch eine schwarze Einfärbung ist es für übliches Laserlicht absorbierend.

Mittels eines leicht konischen Dornes wird das Vlies 9 an der Innenwandung des Anschlußstutzens 7 fixiert und leicht angepreßt. Das Ende 16 des zu einem Schlauch geformten Vlieses 9 überlappt dabei den Anschlußstutzen 7 um 15 mm. Die Kanten 11, 12 des Vlieses 9 überlappen sich um ca. 10 mm (Überlappungsbereich 10). Anschließend erfolgt von der Außenseite A (Fig. 1) eine Verschweißung des Vlieses 9 mit dem Anschlußstutzen 7. Hierzu wird ein Schweißgerät Typ ND:YAG mit einer Leistung von 80 W verwendet.

Vor dem Einbringen der Anschlußmanschette 5 in den Kanal 1 wird das Vlies 9 zunächst vollständig mit einem handelsüblichen Epoxidharz satt getränkt. Anschließend wird die Anschlußmanschette 5 mittels eines Roboters in dem Kanalrohr 1 an der Hausanschlußstelle 4 positioniert. Mit Hilfe des Roboters wird die Anschlußmanschette 5 anschließend an den Inliner 3 gepreßt. Durch Anlegen einer elektrischen Spannung an die Anschlußkontakte 13, 14 der Heizwendel 8 wird der eigentliche Schweißvorgang eingeleitet. Sobald die Heizwendel 8 genügend erwärmt ist, verformt sich diese stark elliptisch, so daß der Schweißvorgang exakt kontrolliert werden kann. Nach erfolgter Verschweißung ist sowohl der oberflächennahe Bereich der Krempe 6 als auch der des Inliners 3 angeschmolzen und jeweils mit dem Kunststoffmaterial der Heizwendel 8 verschmolzen, so daß eine homogene Verschweißung erfolgt ist. Im nächsten Arbeitsgang wird das mit dem Epoxidharz getränkte Vlies 9 in den Hausanschluß 2 eingestülpt und mittels einer Blase an die Wandung des Hausanschlusses 2 angepreßt. Nach Aushärten des Epoxidharzes wird die Blase wieder eingezogen und der Roboter aus dem Kanalrohr 1 entfernt.

### Legende

- 1: Kanalrohr
- 2: Hausanschluß
- 3: Inliner
- 4: Hausanschlußstelle
- 5: Anschlußmanschette
- 6: Krempe
- 7: Anschlußstutzen
- 8: Heizwendel
- 9: Vlies
- 10: Kante
- 11: Kante
- 12: Überlappung
- 13: Anschlußkontakt
- 14: Anschlußkontakt
- 15: Ausnehmung
- 16: Ende

## Patentansprüche

1. Verfahren zum fluiddichten Anbinden von Hausanschlüssen an ein mit einem thermoplastischen Inliner (3) saniertes Kanalrohr (1) o. dgl. mittels einer hutförmigen Anschlußmanschette (5), umfassend folgende Verfahrensschritte:
- Herstellen der hutförmigen Anschlußmanschette (5) mit
-- einer Krempe (6) aus thermoplastischem Kunststoff, wobei die Krempe (6) eine Ausnehmung (15) aufweist, die in Form und Abmessung etwa dem sichtbaren Querschnitt des Hausanschlusses entspricht,
-- und mit einem als Schlauch geformten, aus Fasern oder Fäden bestehenden, mit einem aushärtbaren Mittel tränkbaren Flächengebilde wie Vlies, Gewebe, Gewirke o. dgl. aus thermoplastischem Kunststoff,
-- durch Verschweißen der Krempe (6) im Bereich der Ausnehmung (15) mit dem schlauchförmig geformten Flächengebilde, wobei das schlauchförmig geformte Flächengebilde mit einem seiner Enden die Krempe (6) im Bereich der Ausnehmung (15) wenigstens teilweise überlappt;
- Verschweißen der Krempe (6) der hutförmigen Anschlußmanschette (5) mit dem thermoplastischen Inliner (3);
- Tränken des schlauchförmig geformten Flächengebildes mit einem aushärtbaren Mittel;
- Verkleben des mit dem aushärtbaren Mittel getränkten Flächengebildes mit der Innenwandung des Hausanschlusses.

2. Verfahren zum fluiddichten Anbinden von Hausanschlüssen an ein mit einem thermoplastischen Inliner (3) saniertes Kanalrohr (1) o. dgl. mittels einer hutförmigen Anschlußmanschette (5), umfassend folgende Verfahrensschritte:
- Herstellen der hutförmigen Anschlußmanschette (5) mit
-- einer Krempe (6) aus thermoplastischem Kunststoff, wobei die Krempe (6) eine Ausnehmung (15) aufweist, die in Form und Abmessung etwa dem sichtbaren Querschnitt des Hausanschlusses entspricht und die einem angeformten oder angeschweißten Anschlußstutzen (7) im Bereich der Ausnehmung (15) aufweist,
-- und mit einem als Schlauch geformten, aus Fasern oder Fäden bestehenden, mit einem aushärtbaren Mittel tränkbaren Flächengebilde wie Vlies, Gewebe, Gewirke o. dgl. aus thermoplastischem Kunststoff,
-- durch Verschweißen des Anschlußstutzens (7) mit dem schlauchförmig geformten Flächengebilde, wobei das schlauchförmig geformte Flächengebilde mit einem seiner Enden den angeformten oder angeschweißten Anschlußstutzen (7) wenigstens teilweise überlappt;
- Verschweißen der Krempe (6) der hutförmigen Anschlußmanschette (5) mit dem thermoplastischen Inliner (3);
- Tränken des schlauchförmig geformten Flächengebildes mit einem aushärtbaren Mittel;
- Verkleben des mit dem aushärtbaren Mittel getränkten Flächengebildes mit der Innenwandung des Hausanschlusses.

3. Hutförmige Anschlußmanschette (5) zum fluiddichten Anbinden von Hausanschlüssen an ein mit einem thermoplastischen Inliner (3) saniertes Kanalrohr (1) o. dgl. nach Anspruch 1,
- mit einer Krempe (6) aus thermoplastischem Kunststoff
-- mit einer Ausnehmung (15), die in Form und Abmessung etwa dem sichtbaren Querschnitt des Hausanschlusses entspricht,
- mit einem als Schlauch geformten, aus Fasern oder Fäden bestehenden, mit einem aushärtbaren Mittel tränkbaren Flächengebilde wie Vlies, Gewebe, Gewirke o. dgl. aus thermoplastischem Kunststoff,
- wobei das schlauchförmig geformte Flächengebilde mit einem seiner Enden die Krempe (6) im Bereich der Ausnehmung (15) überlappt und mit dieser verschweißt ist.

4. Hutförmige Anschlußmanschette (5) zum fluiddichten Anbinden von Hausanschlüssen an ein mit einem thermoplastischen Inliner (3) saniertes Kanalrohr (1) o. dgl. nach Anspruch 2,
- mit einer Krempe (6) aus thermoplastischem Kunststoff
-- mit einer Ausnehmung (15), die in Form und Abmessung etwa dem sichtbaren Querschnitt des Hausanschlusses entspricht und
-- mit einem angeformten oder angeschweißten Anschlußstutzen (7) im Bereich der Ausnehmung (15) der Krempe (6),
- mit einem als Schlauch geformten, aus Fasern oder Fäden bestehenden, mit einem aushärtbaren Mittel tränkbaren Flächengebilde wie Vlies, Gewebe, Gewirke o. dgl. aus thermoplastischem Kunststoff,
- wobei das schlauchförmig geformte Flächengebilde mit einem seiner Enden den angeformten oder angeschweißten Anschlußstutzen (7) wenigstens teilweise überlappt und mit diesem verschweißt ist.

5. Hutförmige Anschlußmanschette (5) nach einem der Ansprüche 3 oder 4, ***dadurch gekennzeichnet,* daß** die Krempe (6) für Laserlicht transparent und das als Schlauch geformte Flächengebilde für Laserlicht absorbierend ausgeführt ist.

6. Hutförmige Anschlußmanschette (5) nach einem der Ansprüche 3 bis 5, ***gekennzeichnet durch*** eine ring- oder spiralförmig angeordnete Heizwendel (8) im Bereich der Krempe (6).

7. Hutförmige Anschlußmanschette (5) nach Anspruch 6, ***dadurch gekennzeichnet,* daß** die ring- oder spiralförmig angeordnete Heizwendel (8) aus einem schlauch- oder drahtförmigen Kunststoffprofil besteht, in das in der Nähe der Oberfläche eine Heizwendel (8) eingebettet ist.

8. Verfahren zur Herstellung einer hutförmigen Anschlußmanschette (5) nach Anspruch 5, ***dadurch gekennzeichnet*, daß** das zu einem Schlauch geformte Flächengebilde von einer Seite an die Krempe (6) bzw. an den Anschlußstutzen (7) angepreßt und von der anderen Seite der Krempe (6) bzw. des Anschlußstutzens (7) durch die Krempe (6) bzw. durch den Anschlußstutzen (7) hindurch mit Laserlicht mit der Krempe (6) bzw. mit dem Anschlußstutzen (7) verschweißt wird.

## Claims

1. Method for the fluid-tight tie-up of house connections to a sewer pipe (1) or the like, renovated with a thermoplastic inliner (3), by means of a cap-shaped connecting collar (5), comprising the following method steps:
- production of the cap-shaped connecting collar (5) with
-- a rim (6) of thermoplastic, the rim (6) having a recess (15) which corresponds in shape and dimension approximately to the visible cross section of the house connection,
-- and with a sheet-like structure, such as a non-woven fabric, woven fabric, knitted fabric or the like, consisting of thermoplastic, which is shaped as a hose and consists of fibres or threads and which is capable of being impregnated with a curable agent,
-- by the welding of the rim (6) to the hose-shaped sheet-like structure in the region of the recess (15), the hose-shaped sheet-like structure at least partially overlapping with one of its ends the rim (6) in the region of the recess (15);
- welding of the rim (6) of the cap-shaped connecting collar (5) to the thermoplastic inliner (3);
- impregnation of the hose-shaped sheet-like structure with a curable agent;
- adhesive bonding of the sheet-like structure impregnated with the curable agent to the inner wall of the house connection.

2. Method for the fluid-tight tie-up of house connections to a sewer pipe (1) or the like, renovated with a thermoplastic inliner (3), by means of a cap-shaped connecting collar (5), comprising the following method steps:
- production of the cap-shaped connecting collar (5) with
-- a rim (6) of thermoplastic, the rim (6) having a recess (15) which corresponds in shape and dimension approximately to the visible cross section of the house connection and which has an integrally formed or integrally welded connection piece (7) in the region of the recess (15),
-- and with a sheet-like structure, such as a non-woven fabric, woven fabric, knitted fabric or the like, consisting of thermoplastic, which is shaped as a hose and consists of fibres or threads and which is capable of being impregnated with a curable agent,
-- by the welding of the connection piece (7) to the hose-shaped sheet-like structure, the hose-shaped sheet-like structure at least partially overlapping with one of its ends the integrally formed or integrally welded connection piece (7);
- welding of the rim (6) of the cap-shaped connecting collar (5) to the thermoplastic inliner (3);
- impregnation of the hose-shaped sheet-like structure with a curable agent;
- adhesive bonding of the sheet-like structure impregnated with the curable agent to the inner wall of the house connection.

3. Cap-shaped connecting collar (5) for the fluidtight tie-up of house connections to a sewer pipe (1) or the like, renovated with a thermoplastic inliner (3), according to Claim 1,
- with a rim (6) of thermoplastic,
-- having a recess (15) which corresponds in shape and dimension approximately to the visible cross section of the house connection,
- with a sheet-like structure, such as a non-woven fabric, woven fabric, knitted fabric or the like, consisting of thermoplastic, which is shaped as a hose and consists of fibres or threads and which is capable of being impregnated with a curable agent,
- the hose-shaped sheet-like structure overlapping with one of its ends the rim (6) in the region of the recess (15) and being welded to said rim.

4. Cap-shaped connecting collar (5) for the fluid-tight tie-up of house connections to a sewer pipe (1) or the like, renovated with a thermoplastic inliner (3), according to Claim 2,
- with a rim (6) of thermoplastic,
-- having a recess (15) which corresponds in shape and dimension approximately to the visible cross section of the house connection, and
-- having an integrally formed or integrally welded connection piece (7) in the region of the recess (15) of the rim (6),
- with a sheet-like structure, such as a non-woven fabric, woven fabric, knitted fabric or the like, consisting of thermoplastic, which is shaped as a hose and consists of fibres or threads and which is capable of being impregnated with a curable agent,
- the hose-shaped sheet-like structure at least partially overlapping with one of its ends the integrally formed or integrally welded connection piece (7) and being welded to the latter.

5. Cap-shaped connecting collar (5) according to one of Claims 3 and 4, **characterized in that** the rim (6) is transparent to laser light and the sheet-like structure shaped as a hose is designed to absorb laser light.

6. Cap-shaped connecting collar (5) according to one of Claims 3 to 5, **characterized by** an annularly or spirally arranged heating coil (8) in the region of the rim (6).

7. Cap-shaped connecting collar (5) according to Claim 6, **characterized in that** the annularly or spirally arranged heating coil (8) consists of a hose-shaped or wire-like plastic profile, into which a heating coil (8) is embedded in the vicinity of the surface.

8. Method for producing a cap-shaped connecting collar (5) according to Claim 5, **characterized in that** the sheet-like structure shaped into a hose is pressed from one side onto the rim (6) or onto the connection piece (7) and from the other side of the rim (6) or the connection piece (7) is welded through the rim (6) or through the connection piece (7) by means of laser light to the rim (6) or to the connection piece (7).

## Revendications

1. Procédé pour relier de manière étanche aux fluides des raccordements de maisons à une canalisation d'égout (1) rénovée à l'aide d'une chemise interne (3) thermoplastique, ou similaire, au moyen d'un manchon de raccordement (5) en forme de chapeau, comprenant les étapes de procédé suivantes :
- réalisation du manchon de raccordement (5) en forme de chapeau, avec
- une collerette (6) en matière synthétique thermoplastique, la collerette (6) présentant une découpe (15) dont la forme et les dimensions correspondent sensiblement à la section transversale visible du raccordement de maison,
- et avec un produit textile plat, par exemple un feutre, un tissu ou un tricot ou similaire en matière synthétique thermoplastique, configuré en forme de tube souple, constitué de fibres ou de fils, apte à être imprégné d'un agent durcissable,
- par soudage de la collerette (6) dans la région de la découpe (15) au produit textile plat configuré en forme de tube souple, le produit textile plat configuré en forme de tube souple recouvrant au moins partiellement par l'une de ses extrémités la collerette (6) dans la région de la découpe (15) ;
- soudage de la collerette (6) du manchon de raccordement (5) en forme de chapeau à la chemise intérieure (3) thermoplastique ;
- imprégnation du produit textile plat configuré en forme de tube souple par un agent durcissable; et
- collage du produit textile plat imprégné par l'agent durcissable à la paroi intérieure du raccordement de maison.

2. Procédé pour relier de manière étanche aux fluides des raccordements de maisons à une canalisation d'égout (1) rénovée à l'aide d'une chemise interne (3) thermoplastique, ou similaire, au moyen d'un manchon de raccordement (5) en forme de chapeau, comprenant les étapes de procédé suivantes :
- réalisation du manchon de raccordement (5) en forme de chapeau, avec
- une collerette (6) en matière synthétique thermoplastique, la collerette (6) présentant une découpe (15) dont la forme et les dimensions correspondent sensiblement à la section transversale visible du raccordement de maison et qui présente un raccord (7) formé ou soudé dans la région de la découpe (15),
- et avec un produit textile plat, par exemple un feutre, un tissu ou un tricot ou similaire en matière synthétique thermoplastique, configuré en forme de tube souple, constitué de fibres ou de fils, apte à être imprégné d'un agent durcissable,
- par soudage du raccord (7) au produit textile plat configuré en forme de tube souple, le produit textile plat configuré en forme de tube souple recouvrant au moins partiellement par l'une de ses extrémités le raccord (7) formé ou soudé ;
- soudage de la collerette (6) du manchon de raccordement (5) en forme de chapeau à la chemise intérieure (3) thermoplastique ;
- imprégnation du produit textile plat configuré en forme de tube souple par un agent durcissable; et
- collage du produit textile plat imprégné par l'agent durcissable à la paroi intérieure du raccordement de maison.

3. Manchon de raccordement (5) en forme de chapeau pour relier de manière étanche aux fluides des raccordements de maisons à une canalisation d'égout (1) rénovée à l'aide d'une chemise interne (3) thermoplastique, ou similaire, selon la revendication 1,
- avec une collerette (6) en matière synthétique thermoplastique, présentant une découpe (15) dont la forme et les dimensions correspondent sensiblement à la section transversale visible du raccordement de maison,
- et avec un produit textile plat, par exemple un feutre, un tissu ou un tricot ou similaire en matière synthétique thermoplastique, configuré en forme de tube souple, constitué de fibres ou de fils, apte à être imprégné d'un agent durcissable,
- le produit textile plat configuré en forme de tube souple recouvrant au moins partiellement par l'une de ses extrémités la collerette (6) dans la région de la découpe (15) et étant soudé à cette dernière.

4. Manchon de raccordement (5) en forme de chapeau pour relier de manière étanche aux fluides des raccordements de maisons à une canalisation d'égout (1) rénovée à l'aide d'une chemise interne (3) thermoplastique, ou similaire, selon la revendication 2,
- avec une collerette (6) en matière synthétique thermoplastique, présentant une découpe (15) dont la forme et les dimensions correspondent sensiblement à la section transversale visible du raccordement de maison et qui présente un raccord (7) formé ou soudé dans la région de la découpe (15) de la collerette (6),
- et avec un produit textile plat, par exemple un feutre, un tissu ou un tricot ou similaire en matière synthétique thermoplastique, configuré en forme de tube souple, constitué de fibres ou de fils, apte à être imprégné d'un agent durcissable,
- le produit textile plat configuré en forme de tube souple recouvrant au moins partiellement par l'une de ses extrémités le raccord (7) formé ou soudé et étant soudé à ce dernier.

5. Manchon de raccordement (5) en forme de chapeau selon l'une des revendications 3 ou 4, **caractérisé en ce que** la collerette (6) est transparente à la lumière laser, et un produit textile plat en forme de tube souple est réalisé de manière à absorber la lumière laser.

6. Manchon de raccordement (5) en forme de chapeau selon l'une des revendications 3 à 5, **caractérisé par** une spirale de chauffage (8) disposée en anneau ou en spirale dans la région de la collerette (6).

7. Manchon de raccordement (5) en forme de chapeau selon la revendication 6, **caractérisé en ce que** la spirale de chauffage (8) disposée en forme d'anneau ou de spirale est constituée d'un profilé en matière synthétique en forme de tube souple ou de fil, dans lequel une spirale de chauffage (8) est incorporée à proximité de la surface.

8. Procédé de fabrication d'un manchon de raccordement (5) en forme de chapeau selon la revendication 5, **caractérisé en ce que** le produit textile plat configuré en forme de tube souple est compressé d'un côté sur la collerette (6) ou sur le raccord (7) et de l'autre côté de la collerette (6) ou du raccord (7), est soudé à travers la collerette (6) ou le raccord (7) par une lumière laser à la collerette (6) ou au raccord (7).
